# EUROPÄISCHE PATENTANMELDUNG

(11) **EP 3 466 849 A1**
(43) Veröffentlichungstag der Anmeldung: **10.04.2019**
(21) Anmeldenummer: 17194871.4
(22) Anmeldetag: 05.10.2017
(51) Int. Cl.: B65G 67/20, B65G 67/26

(54) **ENTLADEVORRICHTUNG UND VERFAHREN ZUM ENTLADEN VON STÜCKGÜTERN AUS EINER TRANSPORTEINHEIT**

(71) Anmelder: Siemens Aktiengesellschaft, 80333 München (DE)
(72) Erfinder: BERDELLE-HILGE, Dr. Peter, 78464 Konstanz (DE)
(74) Vertreter: Maier, Daniel Oliver

(57) **Zusammenfassung**

Die Erfindung betrifft eine Entladevorrichtung (2) zum Entladen von inhomogenen und/oder homogenen Stückgütern (4) aus einem Gutbereich (6) einer Transporteinheit (8), insbesondere eines Wechselbehälters, und ein Verfahren zum Entladen solcher Stückgüter (4) mit dieser Entladevorrichtung (2). Die Entladevorrichtung (2) umfasst eine auf dem Boden der Transporteinheit (8) angeordnete, eine Gutaufstandsfläche (10) bildende Gutunterlage (12), welche entlang einer Entladerichtung (14) Nuten (16) aufweist und ein entlang der Entladerichtung (14) bewegliches und von einer Ladeseite (18) der Transporteinheit (8) in die Nuten (16) und in den Gutbereich (6) ganz oder zumindest teilweise einführbares, Zinken (20) umfassendes Nutgegenstück (22). Zum Entladen werden die Zinken (20) in die Nuten (16) eingeführt und das Nutgegenstück (22) transportiert Stückgüter (4) aus dem Gutbereich (6) entlang der Entladerichtung (14), während die Zinken (20) ganz oder zumindest teilweise in die Nuten (16) eingeführt und/oder ganz oder zumindest teilweise oberhalb der Nuten (16) angeordnet sind. Diese Lösung ist kostengünstig, leicht nachrüstbar, effizient und erfordert geringe Umrüstzeiten während des Betriebs.

## Beschreibung

Die vorliegende Erfindung betrifft eine Entladevorrichtung und ein Verfahren zum Entladen von in einer Transporteinheit angeordneten Stückgütern.

Der Transport von Stückgütern wie Paketen zwischen Bearbeitungszentren in einem modalen Netzwerk von Logistikunternehmen erfolgt über Transporteinheiten, typischerweise als Wechselbrücken oder Container ausgestaltete LKW-Auflieger. Diese Transporteinheiten müssen häufig be- und entladen werden, weshalb diese Vorgänge so effizient wie möglich sein sollen.

Der Be- als auch Entladevorgang erfolgt ganz überwiegend noch manuell. Es gibt jedoch Ansätze, insbesondere den Entladevorgang teil- bzw. vollautomatisch durchzuführen. Hierzu wird in der Transporteinheit ein stationärer Gurtförderer über ihre gesamte Länge verwendet oder eine manuelle Entladung durch mehrere parallele Fördereinrichtungen, die mit einem Bediener in die Wechselbrücke dynamisch schrittweise einfahren, unterstützt. Weiterhin gibt es eine Vorrichtung, welche ein stationäres teppichartiges Aufstandsmittel in der Transporteinheit verwendet. Das Aufstandsmittel ist nur bedingt robust und das Aufstandsmittel muss während des Entladens mit einer zusätzlich erforderlichen Umlenkvorrichtung zeitaufwendig auf- und abgerollt werden, wodurch der Entladedurchsatz limitiert wird.

Der vorliegenden Erfindung liegt daher die Aufgabe zugrunde, eine Entladevorrichtung und ein Verfahren zum Entladen von in einer Transporteinheit angeordneten Stückgütern bereitzustellen, ohne die Nachteile des Standes der Technik aufzuweisen. Diese Aufgabe wird durch die in den unabhängigen Ansprüchen beschriebenen Lösungen gelöst.

Die erfindungsgemäße Lösung sieht eine Entladevorrichtung zum Entladen von inhomogenen und/oder homogenen Stückgütern aus einem Gutbereich einer Transporteinheit, insbesondere eines Wechselbehälters, vor, umfassend eine auf dem Boden der Transporteinheit angeordnete, eine Gutaufstandsfläche bildende Gutunterlage, welche entlang einer Entladerichtung Nuten aufweist und ein entlang der Entladerichtung bewegliches und von einer Ladeseite der Transporteinheit in die Nuten und in den Gutbereich ganz oder zumindest teilweise einführbares, Zinken umfassendes Nutgegenstück. Das Nutgegenstück ist ausgestaltet, Stückgüter aus dem Gutbereich entlang der Entladerichtung zu transportieren, während die Zinken ganz oder zumindest teilweise in die Nuten eingeführt und/oder ganz oder zumindest teilweise oberhalb der Nuten angeordnet sind.

Unter einem Gutbereich soll insbesondere derjenige Bereich der Transporteinheit verstanden werden, in dem sich die Stückgüter tatsächlich befinden. Die Ausdehnung des Gutbereichs hängt somit vom tatsächlichen Beladezustand ab. Unter einer Nut soll eine längliche Vertiefung bzw. Aussparung der Gutunterlage verstanden werden, die angepasst auf die Zinken des Nutgegenstücks dimensioniert sind. Die Nuten liegen somit unterhalb der Gutaufstandsfläche. Die Zinken sind Stäbe, deren Höhe maximal genauso hoch oder leicht niedriger als die Höhe der Nut ist. Um ein gemeinsames Einführen der Zinken zu erleichtern, können diese an ihren dem Gutbereich abgewandten Enden starr und/oder beweglich miteinander verbunden sein. Unter einem Nutgegenstück soll im Wesentlichen die Gesamtheit der Zinken sowie diese zusammen haltende Vorrichtungen verstanden werden. Das Nutgegenstück kann zudem noch weitere Vorrichtungen umfassen.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Um die vom Nutgegenstück transportierten Stückgüter weiter abzutransportieren, kann die Entladevorrichtung zudem eine an das Nutgegenstück anschließende Fördereinrichtung zum Abtransportieren der Stückgüter umfassen. Wenn die Fördereinrichtung zudem noch gelenkig an das Nutgegenstück anschließend anbindend ausgebildet wird, wird der Ausrichtungsaufwand von der Entladevorrichtung zur Transporteinheit minimiert.

Gemäß einer Ausführungsform können die Zinken ganz oder zumindest teilweise unterhalb und/oder im Wesentlichen auf Höhe der Gutaufstandsfläche in die Nuten einführbar sein und/oder nach ihrer Einführung in die Nuten und in den Gutbereich von unterhalb und/oder im Wesentlichen von Höhe der Gutaufstandsfläche bis auf Höhe und/oder bis oberhalb der Gutaufstandsfläche bewegbar sein. Durch die vertikale Beweglichkeit der Zinken kann ihre Bewegung in den Nuten besonders gutschonend ohne bzw. mit nur geringer Wechselwirkung mit den auf der Gutaufstandsfläche aufliegenden Stückgütern erfolgen. Durch das nach oben Bewegen der Zinken liegt ein zuvor auf der Gutunterlage liegendes Stückgut nun auch ganz oder zumindest teilweise auf den Zinken auf. Die Zinken können also vertikal bewegt werden - von unterhalb oder von Höhe der Gutaufstandsfläche bis auf die Höhe oder oberhalb der Gutaufstandsfläche.

Um ein Gleiten der Stückgüter auf dem Nutgegenstück zu erleichtern, können die Zinken und/oder das gesamte Nutgegenstück eine Oberseite mit glatt ausgebildeter Oberfläche aufweisen.

Um einen Transport der Stückgüter auf dem Nutgegenstück zu erleichtern und/oder eine Reibung mit den Stückgütern bei entgegen der Entladerichtung bewegten Zinken und/oder Nutgegenstück zu minimieren, können gemäß einer weiteren Ausführungsform die Zinken und/oder das gesamte Nutgegenstück zumindest entlang der Entladerichtung aktiv und/oder passiv fördernde Fördermittel umfassen.

Um ein gerichtetes Zusammenfallen eines Stückgutstapels entgegen der Entladerichtung zu fördern und/oder um Stückgüter bergauf aus dem Gutbereich in Entladerichtung zu transportieren, können gemäß einer weiteren Ausführungsform die Zinken und/oder das Nutgegenstück so keilförmig ausgebildet oder vor und/oder nach ihrer Einführung in die Nuten und in den Gutbereich so schrägstellbar sein, dass ihre Oberseiten ansteigend geneigt zur Gutaufstandsfläche sind.

Gemäß einer weiteren Ausführungsform können die Zinken nach ihrer Einführung in die Nuten und in den Gutbereich komplett individuell und/oder gruppenweise so vertikal und/oder horizontal bewegbar sein, dass ein Stückgut von den Zinken in und/oder zeitweise auch entgegen der Entladerichtung bewegbar ist. So kann eine zinkenbasierte Förderung erzielt werden, ohne dass ein zusätzliches Fördermittel verbaut werden muss.

Hinsichtlich eines Verfahrens wird die vorstehend genannte Aufgabe gelöst durch ein Verfahren zum Entladen von inhomogenen und/oder homogenen Stückgütern aus einer Transporteinheit mit einer Entladevorrichtung, umfassend ein Zinken aufweisendes Nutgegenstück mit horizontalen und/oder geneigt ausgebildeten Oberseiten. Das Verfahren umfasst die nachfolgenden Verfahrensschritte:
a) Bewegen der Zinken und/oder des Nutgegenstücks entgegen einer Entladerichtung ganz oder zumindest teilweise in einen Gutbereich der Transporteinheit hinein, wobei die Zinken ganz oder zumindest teilweise in Nuten, welche der eine Gutaufstandsfläche bildende Boden der Transporteinheit entlang der Entladerichtung aufweist, eingeführt und/oder ganz oder zumindest teilweise oberhalb der Nuten angeordnet werden.
b) Bewegen eines Stückguts aus dem Gutbereich entlang der Entladerichtung auf den Zinken und/oder dem Nutgegenstück.
c) weiteres Abtransportieren des Stückguts entlang der Entladerichtung.

Gemäß einer Ausführungsform können die Zinken beim Einführen in die Nuten ganz oder zumindest teilweise unterhalb und/oder im Wesentlichen auf Höhe der Gutaufstandsfläche positioniert sein. Dies erleichtert das Einführen durch Vermeidung bzw. Minimierung des Kontakts zwischen Zinken bzw. Oberseite des Nutgegenstücks und den Stückgütern.

Gemäß einer weiteren Ausführungsform kann ein Bewegen der Zinken und/oder des Nutgegenstücks in und/oder entgegen der Entladerichtung erfolgen. Dies ermöglicht in Abhängigkeit von Oberflächenbeschaffenheit, Belegung mit Fördermitteln, Neigung und Positionierung der Zinken hin zur Gutaufstandsfläche unterschiedliche Manipulationen der Stückgüter.

Gemäß einer Ausführungsform kann aktives und/oder passives Fördern des Stückguts entlang der Entladerichtung auf den Zinken und/oder dem Nutgegenstück erfolgen.

Nach Einführung der Zinken in die Nuten und in den Gutbereich kann gemäß einer weiteren Ausführungsform komplett individuelles und/oder gruppenweises, insbesondere gruppenweise versetztes, vertikales und/oder horizontales Bewegen der Zinken erfolgen, so dass ein Stückgut von den Zinken in und/oder zeitweise auch entgegen der Entladerichtung bewegt wird. Hierbei liegt das Stückgut zeitlich wechselnd auf nur einem Teil der Zinken auf, und wird dann in bzw. entgegen der Entladerichtung bewegt, während es auf denjenigen Zinken aufliegt, die in bzw. entgegen der Entladerichtung bewegt werden.

Um die im Gutbereich auf der Gutaufstandsfläche aufliegenden Stückgüter anzuheben, kann gemäß einer Ausführungsform ein Bewegen der Zinken nach ihrer Einführung in die Nuten und in den Gutbereich von unterhalb und/oder im Wesentlichen von Höhe der Gutaufstandsfläche bis auf Höhe und/oder bis oberhalb der Gutaufstandsfläche erfolgen. Ein Anheben der Stückgüter kann auch über eine Schrägneigung der Zinkenoberfläche und Bewegung der Zinken entgegen der Entladerichtung erzielt werden.

Um ein vorteilhaftes Zusammenfallen eines Stückgutstapels zu erzielen, kann gemäß einer Ausführungsform ein Schrägstellen der Zinken und/oder des Nutgegenstücks vor und/oder nach ihrer Einführung in die Nuten und in den Gutbereich erfolgen, so dass ihre Oberseiten ansteigend geneigt zur Gutaufstandsfläche sind.

Gemäß einer weiteren Ausführungsform können die Zinken und/oder das Nutgegenstück nach einem Bewegen des Stückguts aus dem Gutbereich entlang der Entladerichtung auf den Zinken und/oder dem Nutgegenstück, aber vor einem kompletten Herausbewegen der Zinken und/oder des Nutgegenstücks aus der Transporteinheit wieder entgegen der Entladerichtung ganz oder zumindest teilweise in der Gutbereich der Transporteinheit hinein bewegt werden, wobei die Zinken ganz oder zumindest teilweise in die Nuten eingeführt werden können. Dies ermöglicht ein besonders einfaches Fortführen des Entladens weiterer Stückgüter, nachdem ein Stapel von Stückgütern zusammengefallen ist und/oder einzelne Stückgüter bereits entladen worden sind.

Ausführungsformen der Erfindung werden nachfolgend anhand der Figuren beispielsweise näher erläutert. Dabei zeigen:
- Figur 1: einen seitlichen Querschnitt einer Transporteinheit mit einer Entladevorrichtung;
- Figur 2: eine Aufsicht auf die Zinken eines Nutgegenstücks, welche gerade in die Nuten einer Transporteinheit eingeführt werden; und
- Figur 3: eine Entladevorrichtung mit einer keilförmigen Zinke in einer Nut in seitlicher Ansicht.

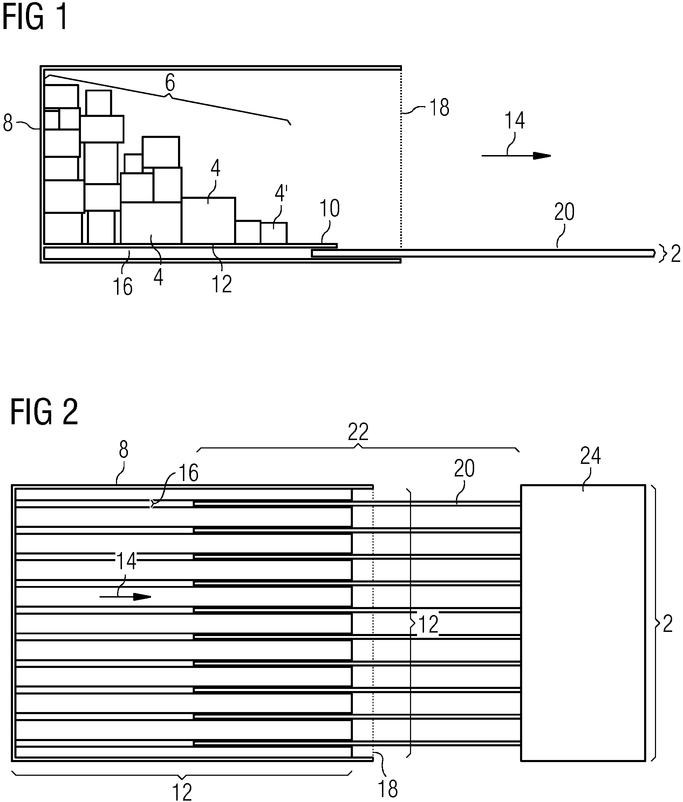

Figur 1 zeigt einen seitlichen Querschnitt einer Transporteinheit 8 mit einer Entladevorrichtung 2 gemäß einer Ausführungsform der Erfindung. Die Transporteinheit 8 ist hier eine Wechselbrücke, die an ihrer Ladeseite 18 geöffnet ist. Die Gutaufstandsfläche 10, auf welcher in einem Gutbereich 6 unterschiedlich große und schwere, also inhomogene Stückgüter 4, 4' wie Pakete, einzeln und gestapelt angeordnet sind, weist in Längsrichtung der Transporteinheit 8, entlang der Entladerichtung 14 und orthogonal zur Ladeseite 18, Nuten 16 auf. Die Gutaufstandsfläche 10 mit den Nuten 16 wird entweder direkt herstellerseitig als Boden der Transporteinheit 8 ausgebildet, oder sie wird nachträglich als Gutunterlage 12 in die Transporteinheit 8 eingebracht, beispielsweise in Form von aneinander gesteckten Fliesen oder einer Art Teppich. Die Nuten 16 erstrecken sich über die gesamte Breite und Länge der Transporteinheit 8 oder nur über einen Teil, wenn beispielsweise nur ein Teil der Transporteinheit 8 als Gutbereich 6 dient.

Die Entladevorrichtung 2 weist zudem Zinken 20 auf, die zunächst waagrecht ausgerichtet sind und in der Art eines Nutgegenstücks 22 in die Nuten 16 einführbar sind. Die Nuten 16 sind längliche Aussparungen, wobei Form, Dimensionierung, und Anzahl von Nuten 16 und Zinken 20 sowie Abstand der Nuten 16 voneinander aneinander angepasst sind. Die die Nuten 16 ausbildenden Rippen sind hinsichtlich Formgebung und Material zudem an die Belastungsarten, beispielsweise durch das Herunterfallen von Stückgütern 4 oder dem Befahren mit Gabelstaplern, entsprechend angepasst. Die Gutaufstandsfläche 10 mit den Nuten 16 sehr robust ausgestaltet, wodurch lange Standzeiten der Wechselbrücke realisierbar sind.

Zum Einführen der Zinken 20 in die Nuten 16 werden die Zinken 20 entgegen der Entladerichtung 14 bewegt und so ganz oder zumindest teilweise in den Gutbereich 6 eingebracht. Das Einführen geschieht typischerweise mit ganz oder zumindest teilweise unterhalb der Gutaufstandsfläche 10 positionierten Zinken 20, so dass die Zinken 20 ohne störende Reibung besonders einfach unterhalb die Stückgüter 4 geschoben werden können. Wenn die Zinken 20 auf Höhe der Gutaufstandsfläche 10 positioniert werden, berührt ihre Oberseite beim Einbringen in den Gutbereich 6 die Unterseite der Stückgüter 4. Da die Zinken 20 in der Höhe verstellbar ausgebildet sind, können sie mit ihrer Oberseite unterhalb (die Stückgüter 4 werden dann nur von der Gutunterlage 12 getragen bzw. liegen auf dieser auf), auf Höhe (die Stückgüter 4 werden dann von den im Gutbereich 6 positionierten Zinken 20 und der Gutunterlage 12 getragen bzw. liegen auf sowohl den Zinken 20, als auch der Gutunterlage 12 auf) und/oder oberhalb der Gutaufstandsfläche 10 (die Stückgüter 4 werden dann nur von den im Gutbereich 6 positionierten Zinken 20 getragen bzw. liegen auf diesen auf - um dies zu realisieren müssen die Zinken 20 unterhalb oder maximal auf Höhe der Gutaufstandsfläche 10 unter die Stückgüter 4 bewegt werden) positioniert werden. Die Zinken 20 können vor und/oder während und/oder nach dem Einführen in die Nuten 16 vertikal bewegt werden. Die Zinken 20 können zudem noch kippbar und/oder keilförmig ausgestaltet sein.

Es ist prinzipiell auch möglich, dass das Nutgegenstück 22 eine weitere, auf den Zinken 20 angeordnete (entlang der gesamten Länge oder auf nur einem Teil eines oder mehrerer Zinken 20), Tragfläche umfasst, die ein Fördermittel umfassen kann, aber nicht muss. Alternativ kann die Oberseite der Tragfläche auch glatt ausgestaltet sein. Beim Einbringen dieser Ausgestaltung des Nutgegenstücks 22 in den Gutbereich 6 würde die Tragfläche unter die Stückgüter 4 geschoben werden, wobei ein eventuell vorhandenes Fördermittel hierbei mit der Einführgeschwindigkeit des Nutgegenstücks 22 in Entladerichtung 14 fördern könnte, um so Relativbewegungen zwischen Stückgütern 4 und Tragfläche zu vermeiden. Die Oberseite der Tragfläche kann auch bei dieser Ausgestaltung des Nutgegenstücks 22 in der Höhe und/oder Neigung variabel einstellbar sein oder durch eine keilförmige Ausgestaltung der Zinken eine festgestellte Neigung aufweisen, allerdings ist hierbei eine Anordnung des gesamten Nutgegenstücks 22 samt Tragfläche unterhalb der Gutaufstandsfläche 10 bei in den Nuten 16 eingeführten Zinken 20 nicht ohne weiteres realisierbar, da die Tragfläche sich über mehr als die Breite einer Nute 16 erstreckt. Das (nicht immer mögliche) Unterfahren der Stückgüter 4 mit der auf den Zinken aufgebrachten Tragfläche ist reibungsbehaftet und kann zu Beschädigungen der Stückgüter 4 durch Einklemmen o.ä. führen. Der Großteil der nachfolgend beschriebenen Ausführungsformen kann auch mit einem derartigen Nutgegenstück 22 realisiert werden, bei ausreichender Stabilität der Zinken 20 ist jedoch die Ausgestaltung ohne diese Tragfläche technisch einfacher zu realisieren, so dass auf diese Ausgestaltungsform im Weiteren nicht weiter eingegangen wird.

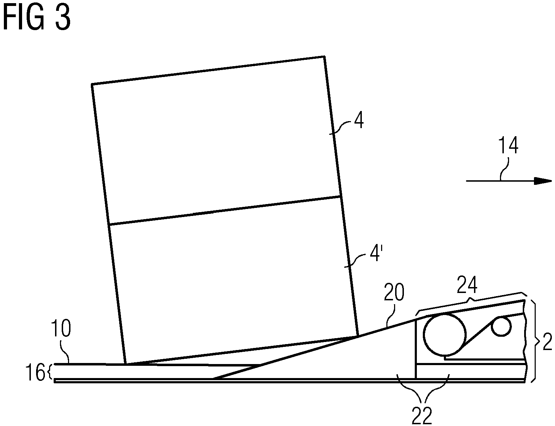

Um ein Stückgut 4 zu entladen, wird zunächst der Zinkenbereich außerhalb der Vordergrenze des Gutbereichs 6 abgesenkt. Danach unterfahren die Zinken 20 des Nutgegenstücks 22 die Gutaufstandsfläche 10, wobei die Zinken 20 entgegen der Entladerichtung 14 in die Nuten 16 und in den Gutbereich 6 eingeführt werden. Bei keilförmiger Ausgestaltung der Zinken 20 wie in Figur 3 würden die Zinken 20 das Stückgut 4 beim Einführen in die Nuten 16, also beim Bewegen der Zinken 20 entgegen der Entladerichtung 14, zunächst nur teilweise unterfahren und das Stückgut 4 so aufnehmen. Wenn die Zinken 20 wie in Figur 1 gezeigt parallel zur und leicht unterhalb der Gutaufstandsfläche 10 positioniert eingeführt werden, tritt beim Einführen der Entladevorrichtung in den Gutbereich 6 keine Wechselwirkung zwischen den Stückgütern 4 und der Oberseite der Zinken 20 auf - eine Bremswirkung und auch eine potentielle Beschädigung der Stückgüter 4 wird vermieden und auch das Einführen geschieht so besonders leicht. Ein Einführen im Wesentlichen auf Höhe der Gutaufstandsfläche 10 ist ebenfalls möglich, nur tritt dann Wechselwirkung zwischen den Stückgütern 4 und der Oberseite der Zinken 20 auf. Um eine Positionierung der Zinken 20 in den Nuten 16 leicht unterhalb der Gutaufstandsfläche 10 zu ermöglichen, müssen die Zinken 20 zumindest leicht niedriger als die Nuten 16 ausgestaltet sein.

Die Entladevorrichtung 2 ermöglicht unterschiedliche Vorgehensweisen zum Entladen der Stückgüter 4, die je nach Ausgestaltung der Entladevorrichtung 2 auch miteinander kombinierbar sind. Die unterschiedlichen Arten des Entladens ermöglichen eine Anpassung an unterschiedliche Arten von Stückgütern 4 und an deren Stapelung in der Transporteinheit 8. Ein Vorgehen involviert eine Schrägneigung oder keilförmige Ausgestaltung der Zinken 20 und/oder des Nutgegenstücks 22 zur Gutaufstandsfläche 10, so dass die Stückgüter 4 beim Transport in Entladerichtung 14 zunächst bergauf transportiert werden. Beim Bewegen der Zinken 20 und/oder des Nutgegenstücks 22 entgegen der Entladerichtung 14 tritt eine reibungsbehaftete Relativbewegung zwischen Stückgütern 4 und Oberseite der Zinken 20 und/oder des Nutgegenstücks 22, sofern diese nicht ein parallel zur Entladerichtung 14 förderndes Fördermittel aufweisen. Das Bewegen der Zinken 20 entgegen der Entladerichtung 14 und das Unterfahren der Stückgüter 4 bewirkt einen Transport der Stückgüter 4 in Entladerichtung 14. Ein weiteres Vorgehen involviert ein Anheben der Zinken 20 und/oder des Nutgegenstücks 22 während des Entladens, wobei die zu entladenden Stückgüter 4 zunächst unterfahren werden (hierbei ist die Oberseite der Zinken 20 und/oder des Nutgegenstücks 22 unterhalb oder maximal im Wesentlichen auf Höhe der Gutaufstandsfläche 10), bevor die Zinken 20 und/oder das gesamte Nutgegenstücks 22 samt den zu entladenen Stückgütern 4 auf eine Höhe oberhalb der Gutaufstandsfläche 10 angehoben und im Anschluss in Entladerichtung bewegt werden, so dass die Stückgüter 4 in Entladerichtung 14 transportiert werden. Je nach Höhe des Anhebens können die Zinken 20 bei ihrem Anheben zumindest teilweise in den Nuten 16 eingeführt bleiben oder oberhalb der Nuten 16 angeordnet sein.

Figur 2 zeigt gemäß einer weiteren Ausführungsform der Erfindung eine Aufsicht auf die Zinken 20 eines Nutgegenstücks 22, wobei die Zinken 20 gerade in die Nuten 16 der Transporteinheit 8 eingeführt werden. Der Übersichtlichkeit zuliebe wurden die zu entladenden Stückgüter 4 nicht dargestellt. Die Anordnung der Nuten 16 ist äquidistant über die Breite der Transporteinheit 8. An das Nutgegenstück 22 schließt direkt eine weitere, von der Entladevorrichtung 2 umfasste Fördereinrichtung 24 an, die ausgestaltet ist, die vom Nutgegenstück 22 aus dem Gutbereich 6 entlang der Entladerichtung 14 hin zur Fördereinrichtung 24 transportierten Stückgüter 4 weiter abzutransportieren. Die Fördereinrichtung 24 ist horizontal und/oder vertikal gelenkig an das Nutgegenstück 22 angebunden. Dies ermöglicht eine Selbstführung der Entladevorrichtung 2 beim Einführen, Einbringen und Bewegen der Zinken 20 des Nutgegenstücks 22 in die bzw. in den Nuten 16. Hierzu wird die Länge und Ausformung der Eingriffsbereiche der Zinken 20 in den Nuten 16 angepasst. Dadurch wird der Ausrichtungsaufwand von Transporteinheit zu Entladevorrichtung 2, also insbesondere diejenige von Zinken 20 zu Nuten 16, und damit die für jeden Entladevorgang notwendigen Umrüst- bzw. Einrichtzeiten signifikant reduziert.

Figur 3 zeigt in seitlicher Ansicht eine weitere Entladevorrichtung 2 mit einer keilförmigen Zinke 20 in einer Nut 16 gemäß noch einer weiteren Ausführungsform der Erfindung. An die Zinken 20 schließt direkt eine Fördereinrichtung 24 zum Abtransportieren der in Entladerichtung 14 über das Nutgegenstück 22 bewegten Stückgüter 4 an. Wie aus der Figur 3 ersichtlich involviert das gezeigte Entladen die Schrägneigung der Zinkenoberfläche, in Entladerichtung 14 gesehen bergauf. Durch die keilförmige Ausgestaltung sind die Zinken 20 des Nutgegenstücks 22 bereits außerhalb des Bereichs der Nuten 16 zur Gutaufstandsfläche 10 ansteigend geneigt - in der Entladerichtung 14 gesehen bergauf. Eine ansteigende Neigung kann bei einer anderen als der in Figur 3 gezeigten Ausgestaltung, bei der die Zinkenoberfläche zunächst waagrecht ist und die Zinken 20 und/oder das Nutgegenstück 22 schrägstellbar ausgestaltet sind durch Schrägstellen der Zinkenoberfläche erzielt werden. Das Schrägstellen kann vor, während und/oder nach dem Einführen der Zinken 20 in die Nuten 16 geschehen. Der Bereich der Zinken 20 des Nutgegenstücks 22 wurde in beiden beschriebenen Fällen außerhalb der Vordergrenze des Gutbereich 6 in die Nuten 16 eingebracht. Anschließend wurden die Zinken 20 und das Nutgegenstück 22 entgegen der Entladerichtung 14 bewegt und so unter die Stückgüter 4 geschoben. Dabei gleitet das unterste Stückgut 4 die reibungsarm ausgestaltete, glatte Oberfläche der Zinken 20 hin zur Fördereinrichtung 24 hinauf. Bei stabiler Stapelung der Stückgüter 4 und/oder nicht allzu starker Neigung der Zinken 20 wird auch das auf dem untersten Stückgut 4 liegende Stückgut 4hin zur Fördereinrichtung 24 hinauf transportiert, auf dem untersten Stückgut 4 aufliegend am Ende der Zinken 20 von der Fördereinrichtung 24 übernommen und von dieser abtransportiert. Das Hinaufgleiten der Stückgüter 4 auf den Zinken 20 in Entladerichtung kann durch eine zusätzliche Belegung der Zinkenoberseite mit einem entlang der Entladerichtung 14 fördernden Fördermittel unterstützt werden.

Durch die Schrägstellung der Zinkenoberfläche wird unterstützt, dass ein Stapel von Stückgütern 4 ab einer gewissen Stapelhöhe beim Abtransportieren zusammenfällt, wobei der Zeitpunkt abhängig ist von Geschwindigkeit, Steigung und zurückgelegter Länge des Abtransports. Das Zusammenfallen erfolgt aufgrund der Schrägstellung (Transport bergauf) vorzugsweise und vorteilhafter Weise entgegen der Entladerichtung 14. Wenn das unterste Stückgut 4 beim Zusammenfallen weiter auf den Zinken 20 aufliegt, wird dieses direkt weiter abtransportiert, die heruntergefallenen Stückgüter 4 werden entweder direkt hinter dem untersten Stückgut 4 weiter als kontinuierlicher Vorgang abtransportiert, oder nach dem Abtransport des untersten Stückguts 4 wird der Vorgang des Abtransportierens zunächst durch Bewegen der Zinken 20 in Entladerichtung 14 unterbrochen. Entsprechend dem abzutransportierenden Volumenstrom wird bei dem beschriebenen kontinuierlichen Vorgang die Bewegung des Nutgegenstücks 22 entgegen der Entladerichtung 14 unterbrochen bzw. die Geschwindigkeit der Vorwärtsbewegung wird angepasst. Alternativ werden die Zinken 20 in Entladerichtung 14 aus dem Gutbereich 6 hinaus bewegt und im Anschluss wieder zurückgefahren. Dies geschieht weiterhin mit durch die Keilform der Zinken schräg ausgerichteter Zinkenoberfläche. Bei dynamisch schrägstellbaren Zinken ist dies auch mit horizontal gestellten Zinken 20 möglich.

Gemäß einer weiteren Ausführungsform erfolgt ein Entladen der Stückgüter 4 mit horizontal ausgerichteten Zinken 20. Ein Absenken der Zinken 20 des Nutgegenstücks 22 unterhalb der Höhe der Gutaufstandsfläche 10 erfolgt außerhalb des Gutbereichs 6 und allenfalls noch vor dem Einführen der Zinken 20 in die Nuten 16. Wenn die Zinken 20 zumindest teilweise im Bereich und zudem oberhalb der Gutaufstandsfläche 10 positioniert sind, geschieht das Einführen der Zinken 20 in die Nuten 16 bereits durch das Absenken der Zinken 20. Wenn dies nicht der Fall ist, werden anschließend die Zinken 20 durch horizontale Bewegung entgegen der Entladerichtung 14 in die Nuten 16 eingeführt und entgegen der Entladerichtung 14 um eine mit der Einführstrecke der Nuten 16 (der Strecke der Nuten 16 außerhalb des Gutbereichs 6) plus der Länge zunächst abzutransportierenden Stückgüter 4 unter ebendiese Stückgüter 4 bewegt. Nun werden ebendiese Stückgüter 4 durch Anheben der Zinken 20 soweit, bis sich die Oberfläche der Zinken 20 oberhalb der Gutaufstandsfläche 10 befindet, bis oberhalb der Gutaufstandsfläche 10 angehoben. Die zunächst unterfahrenen Stückgüter 4 liegen nun einzeln und/oder gestapelt auf den Zinken 10 auf. Anschließend werden die Stückgüter 4 nun in Entladerichtung 14 transportiert, wobei der Transport je nach Ausgestaltung der Zinken 20 bzw. des Nutgegenstücks unterschiedlich ausgeführt werden kann.

Gemäß einer Ausführungsform können alle oder zumindest einiger der Zinken 20 Fördermittel, beispielsweise indem die Zinkenoberfläche Förderbänder umfasst, aufweisen.

Gemäß einer weiteren Ausführungsform werden die Stückgüter 4 auf den Zinken 20 entlang der Entladerichtung transportiert, indem die Zinken 20 gruppenweise kreisend versetzt in bzw. entgegen der Entladerichtung 14 bewegt werden. Besonders einfach kann dies technisch erzielt werden durch ein zwei oder mehr Zinkeneinheiten umfassendes Nutgegenstücks 22, wobei die Zinkeneinheiten Zinken 20 aufweisen, die an einem Ende wie bei einer Gabel miteinander verbunden sind und die Zinkeneinheiten mit alternierenden Zinken ineinander eingreifend gelegt angeordnet sind. Die einzelnen Zinkeneinheiten sind jeweils für sich starr ausgebildet, zueinander jedoch beweglich ausgestaltet. Gemäß einer weiteren Ausführungsform werden die Stückgüter auf den Zinken 20 bzw. dem Nutgegenstück 22 transportiert durch eine von dem Nutgegenstück 22 umfasste, integrierte Schwingfördereinrichtung.

Nach dem Fördern der Stückgüter 4 entlang der Entladerichtung 14 auf den Zinken 20 bzw. dem Nutgegenstück 22 erfolgt ein gezieltes Zurückfahren der Zinken 20 bzw. des Nutgegenstücks 22 in Entladerichtung 14 mit den einzelnen und/oder gestapelt auf den Zinken 20 aufliegenden Stückgütern 4. Wenn ein Stapel von Stückgütern 4 auf den Zinken 20 aufliegt, erfolgt das Zurückfahren so lange, bis der Stapel entgegen der Entladerichtung 14 und entgegen dem Nutgegenstück 22 zusammenbricht. Anschließend wird weiter entladen durch erneutes absenken der Zinken 20 bis unterhalb der Gutaufstandsfläche, unterfahren der zu entladenden Stückgüter 4, anheben der Zinken 20 und der abzutransportierenden Stückgüter und transportieren der Stückgüter 4 in Entladerichtung 14 wie zuletzt beschrieben. Alternativ kann das Entladen auch erfolgen wie weiter oben beschrieben durch Schrägstellen der Zinken 20 und bewegen der Zinken 20 entgegen der Entladerichtung 14, wodurch die Stückgüter 4 auf den Zinken 20 des Nutgegenstücks 2 hochgleiten und in Entladerichtung 14 transportiert werden, wobei dies evtl. noch durch ein weiteres Fördermittel unterstützt wird.

Gemäß einer Ausführungsform erfahren das Nutgegenstück 22 und/oder die die Zinken 22 eine Selbstführung entsprechend der Länge und Ausformung der Eingriffsbereiche der Zinken 20 in den Nuten 16. Dadurch wird der Ausrichtungsaufwand von Transporteinheit 8 zu Nutgegenstück 22 und damit die für jeden Entladevorgang notwendigen Umrüst- bzw. Einrichtzeiten reduziert. Hierzu wird eine allenfalls direkt an das Nutgegenstück 22 anschließende Fördereinrichtung 24 vertikal und/oder horizontal gelenkig angebunden. Diese gelenkige Anbindung erlaubt Translation und Rotation. Durch die freie Beweglichkeit ist keine bzw. kaum Ausrichtung der Entladevorrichtung 2, insbesondere der Fördereinrichtung 24, zur Transporteinheit 8 erforderlich. Bei einer anschließenden Fördereinrichtung 24 wird ein Antrieb des Nutgegenstücks 22, insbesondere der für das Bewegen der Zinken 20 in und entgegen der Entladerichtung 14, von einem Antrieb der Fördereinrichtung 24 übernommen, beispielsweise durch eine feste Kopplung, wodurch beim Aus- und Einfahren und somit bewegen der Fördereinrichtung 24 in und entgegen der Entladerichtung 14 zugleich das Nutgegenstück 22 mitbewegt wird. Diese gekoppelte Bewegung erfordert keine gelenkige Anbindung, kann aber mit einer solchen ebenfalls realisiert werden.

Gemäß einer weiteren Ausführungsform erfolgt das Einbringen der Zinken 20 in die Nuten 16 über entsprechende horizontale und/oder vertikale Vorrichtungen zum Einführen und Zentrieren.

Gemäß einer Ausführungsform sind zumindest die äußeren der Zinken 20 eines Nutgegenstücks 22 klappbar ausgestaltet. So sind auch bei einer nicht vollständig zugänglichen Ladeseite 18 der Transporteinheit 8, beispielweise aufgrund der sich darin befindlichen Toröffnung einer Wechselbrücke, aufgrund derer die Ladeseite 18 der Wechselbrücke nicht vollständig zugänglich ist, die Nuten 16 gesamte Breite des Gutbereichs 6 für die Zinken 20 zugänglich. Nach dem Einbringen des Nutgegenstücks 22 in die Transporteinheit 8 hinein werden die äußeren Zinken 20 ausgeklappt und über die gesamte Breite in die Nuten 16 eingeführt, so dass das Nutgegenstück 22 auch in Hinterschnittbereiche der Toröffnung einbringbar ist.

### Bezugszeichenliste

- 2: Entladevorrichtung
- 4: Stückgut
- 6: Gutbereich
- 8: Transporteinheit
- 10: Gutaufstandsfläche
- 12: Gutunterlage
- 14: Entladerichtung
- 16: Nut
- 18: Ladeseite
- 20: Zinke
- 22: Nutgegenstück
- 24: Fördereinrichtung

## Patentansprüche

1. Entladevorrichtung (2) zum Entladen von inhomogenen und/oder homogenen Stückgütern (4) aus einem Gutbereich (6) einer Transporteinheit (8), insbesondere eines Wechselbehälters, umfassend
- eine auf dem Boden der Transporteinheit (8) angeordnete, eine Gutaufstandsfläche (10) bildende Gutunterlage (12), welche entlang einer Entladerichtung (14) Nuten (16) aufweist;
- ein entlang der Entladerichtung (14) bewegliches und von einer Ladeseite (18) der Transporteinheit (8) in die Nuten (16) und in den Gutbereich (6) ganz oder zumindest teilweise einführbares, Zinken (20) umfassendes Nutgegenstück (22); wobei
- das Nutgegenstück (22) ausgestaltet ist, Stückgüter (4) aus dem Gutbereich (6) entlang der Entladerichtung (14) zu transportieren, während die Zinken (20) ganz oder zumindest teilweise in die Nuten (16) eingeführt und/oder ganz oder zumindest teilweise oberhalb der Nuten (16) angeordnet sind.

2. Entladevorrichtung (2) nach Anspruch 1, zudem umfassend eine an das Nutgegenstück (22) anschließende Fördereinrichtung (24) zum Abtransportieren der Stückgüter (4).

3. Entladevorrichtung (2) nach einem der Ansprüche 1 bis 2, **dadurch gekennzeichnet, dass**
die Zinken (20) ganz oder zumindest teilweise unterhalb und/oder im Wesentlichen auf Höhe der Gutaufstandsfläche (10) in die Nuten (16) einführbar sind und/oder nach ihrer Einführung in die Nuten (16) und in den Gutbereich (6) von unterhalb und/oder im Wesentlichen von Höhe der Gutaufstandsfläche (10) bis auf Höhe und/oder bis oberhalb der Gutaufstandsfläche (10) bewegbar sind.

4. Entladevorrichtung (2) nach einem der Ansprüche 1 bis 3, **dadurch gekennzeichnet, dass**
die Zinken (20) und/oder das gesamte Nutgegenstück (22) eine Oberseite mit glatt ausgebildeter Oberfläche aufweisen.

5. Entladevorrichtung (2) nach einem der Ansprüche 1 bis 4, **dadurch gekennzeichnet, dass**
die Zinken (20) und/oder das gesamte Nutgegenstück (22) zumindest entlang der Entladerichtung (14) aktiv und/oder passiv fördernde Fördermittel umfassen.

6. Entladevorrichtung (2) nach einem der Ansprüche 1 bis 5, **dadurch gekennzeichnet, dass**
die Zinken (20) und/oder das Nutgegenstück (22) so keilförmig ausgebildet oder vor und/oder nach ihrer Einführung in die Nuten (16) und in den Gutbereich (6) so schrägstellbar sind, dass ihre Oberseiten ansteigend geneigt zur Gutaufstandsfläche (10) sind.

7. Entladevorrichtung (2) nach einem der Ansprüche 1 bis 6, **dadurch gekennzeichnet, dass**
die Zinken (20) nach ihrer Einführung in die Nuten (16) und in den Gutbereich (6) komplett individuell und/oder gruppenweise so vertikal und/oder horizontal bewegbar sind, dass ein Stückgut (4) von den Zinken (20) in und/oder zeitweise auch entgegen der Entladerichtung (14) bewegbar ist.

8. Verfahren zum Entladen von inhomogenen und/oder homogenen Stückgütern (4) aus einer Transporteinheit (8) mit einer Entladevorrichtung (2), umfassend ein Zinken (20) aufweisendes Nutgegenstück (22) mit horizontalen und/oder geneigt ausgebildeten Oberseiten, umfassend die nachfolgenden Verfahrensschritte:
a) Bewegen der Zinken (20) und/oder des Nutgegenstücks (22) entgegen einer Entladerichtung (14) ganz oder zumindest teilweise in einen Gutbereich (6) der Transporteinheit (8) hinein, wobei die Zinken (20) ganz oder zumindest teilweise in Nuten (16), welche der eine Gutaufstandsfläche (10) bildende Boden der Transporteinheit (8) entlang der Entladerichtung (14) aufweist, eingeführt und/oder ganz oder zumindest teilweise oberhalb der Nuten (16) angeordnet werden;
b) Bewegen eines Stückguts (4) aus dem Gutbereich (6) entlang der Entladerichtung (14) auf den Zinken (20) und/oder dem Nutgegenstück (22);
c) weiteres Abtransportieren des Stückguts (4) entlang der Entladerichtung (14).

9. Verfahren nach Anspruch 8, **dadurch gekennzeichnet, dass** die Zinken (20) beim Einführen in die Nuten (16) ganz oder zumindest teilweise unterhalb und/oder im Wesentlichen auf Höhe der Gutaufstandsfläche (10) positioniert sind.

10. Verfahren nach einem der Ansprüche 8 bis 9, **gekennzeichnet durch**
Bewegen der Zinken (20) und/oder des Nutgegenstücks (22) in und/oder entgegen der Entladerichtung (14).

11. Verfahren nach einem der Ansprüche 8 bis 10, zudem umfassend den Verfahrensschritt
aktives und/oder passives Fördern des Stückguts (4) entlang der Entladerichtung (14) auf den Zinken (20) und/oder dem Nutgegenstück (22).

12. Verfahren nach einem der Ansprüche 8 bis 11, zudem umfassend den Verfahrensschritt
nach Einführung der Zinken (20) in die Nuten (16) und in den Gutbereich (6) komplett individuelles und/oder gruppenweises, insbesondere gruppenweise versetztes, vertikales und/oder horizontales Bewegen der Zinken (20), so dass ein Stückgut (4) von den Zinken (20) in und/oder zeitweise auch entgegen der Entladerichtung (14) bewegt wird.

13. Verfahren nach einem der Ansprüche 8 bis 12, zudem umfassend den Verfahrensschritt
Bewegen der Zinken (20) nach ihrer Einführung in die Nuten (16) und in den Gutbereich (6) von unterhalb und/oder im Wesentlichen von Höhe der Gutaufstandsfläche (10) bis auf Höhe und/oder bis oberhalb der Gutaufstandsfläche (10).

14. Verfahren nach einem der Ansprüche 8 bis 13, zudem umfassend den Verfahrensschritt
Schrägstellen der Zinken (20) und/oder des Nutgegenstücks (22) vor und/oder nach ihrer Einführung in die Nuten (16) und in den Gutbereich (6), so dass ihre Oberseiten ansteigend geneigt zur Gutaufstandsfläche (10) sind.

15. Verfahren nach einem der Ansprüche 8 bis 14, **dadurch gekennzeichnet, dass**
die Zinken (20) und/oder das Nutgegenstück (22) nach einem Bewegen des Stückguts (4) aus dem Gutbereich (6) entlang der Entladerichtung (14) auf den Zinken (20) und/oder dem Nutgegenstück (22), aber vor einem kompletten Herausbewegen der Zinken (20) und/oder des Nutgegenstücks (22) aus der Transporteinheit (8) wieder entgegen der Entladerichtung (14) ganz oder zumindest teilweise in der Gutbereich (6) der Transporteinheit (8) hinein bewegt werden, wobei die Zinken (20) ganz oder zumindest teilweise in die Nuten (16) eingeführt werden.
